# EUROPEAN PATENT APPLICATION

(11) **EP 1 998 282 A1**
(43) Date of publication of application: **03.12.2008**
(21) Application number: 06729546.9
(22) Date of filing: 20.03.2006
(51) Int. Cl.: G06T 1/00

(54) **VIDEO IMAGE INFORMATION PROCESSING DEVICE, JUDGING METHOD, AND COMPUTER PROGRAM**

(71) Applicant: Olympus Corporation, Tokyo 151-0072 (JP)
(72) Inventor: SAITO, Akito, c/o Olympus Intellectual Prop. Serv. Co., Ltd., Hachioji-shi, Tokyo 192-8512 (JP); AKATSUKA, Yuichiro, c/o Olympus Intellectual Prop. Serv. Co., Ltd., Tokyo 192-8512 (JP); SHIBASAKI, Takao, c/o Olympus Intellectual Prop. Serv. Co., Ltd., Hachioji-shi, Tokyo 192-8512 (JP); FURUHASHI, Yukihito, c/o Olympus Intellectual Prop. Serv. Co., Ltd., Tokyo 192-8512 (JP)
(74) Representative: von Hellfeld, Axel
(86) International application number: PCT/JP2006/305578
(87) International publication number: WO 2007/108100

(57) **Abstract**

Image information is input by an image input unit (10), a marker (100) is extracted from an image of the input image information by a marker detector (21), a position of the extracted marker (100) in the image is detected by a position/posture detector (22), and the difference between indicators extracted from images is judged. At this time, the position/posture detector (22) is provided with a judgment condition based on the position of each marker (100), as a judgment condition that is at least selectively applied.

## Description

### Technical Field

The present invention relates to an image information processing apparatus, a judging method, and a computer program, which judge the difference between indicators existing in two or more images.

### Background Art

As an information supply unit to supply predetermined related information for an object in the real world and/or a preset indicator (marker), a barcode reader is well known. Among such units, one supplies information by using spatial information of an object and/or a preset marker.

As such a unit, for example, USP Patent No. 6,389,182 discloses the following technique. That is, a two-dimensional code printed on a name card is read by a camera, an ID of the read data is analyzed by a program in a computer, and a photograph of the face of the person corresponding to the ID is displayed on a display screen of a computer, as if it is placed on the side of the two-dimensional code of a name card.

However, in the technique disclosed in USP Patent No. 6,389,182, if two or more same design indicators (markers) exist in an image, they are recognized as the same markers. This is caused by a problem that the markers are not discriminated.

### Disclosure of Invention

The present invention has been performed to solve the above problem. Accordingly, it is an object of the invention to provide an image information processing apparatus, a judging method, and a computer program, which judge the difference between indicators existing in two or more images.

According to an aspect of the invention, there is provided an image information processing apparatus comprising:
an image information input unit (10) for inputting image information;
an extraction unit (21) for extracting an indicator (100) in an image of the image information input by the image information input unit (10);
a position detection unit (22) for detecting a position of the indicator (100) extracted by the extraction unit (21) in the image; and
a judgment unit (22) for judging the difference between indicators extracted from images, having a judgment condition based on the position of each indicator detected by the position detection unit (22), at least as a selectively applied judgment condition.

According to another embodiment of the invention, there is provided a method of judging the difference between indicators existing in images, comprising:
a step (S10, S22) of inputting images;
a step (S12, S24) of extracting an indicator in each input image;
a step (S16, S28) of detecting a position of the extracted indicator on an image; and
a step (S30) of judging the difference between image indicators extracted from the input images, by at least selectively applying a judgment condition based on the detected position of the indicator (100).

According to still another embodiment of the invention, there is provided a computer program to cause a computer to judge the difference between indicators existing in images, comprising:
inputting images (S10, S22);
extracting (S12, S24) an indicator (100) in each input image;
detecting (S12, S26) a position of the extracted indicator (100) on an image; and
judging (S30) the difference between image indicators extracted from the input images, by at least selectively applying a judgment condition based on the detected position of the indicator (100).

### Brief Description of Drawings

FIG. 1 is a block diagram of an image information processing apparatus according to an embodiment of the invention;
FIG. 2 is a diagram for explaining an example of a marker as an indicator;
FIG. 3 is a flowchart for explaining the operation of an image information processing apparatus;
FIG. 4 is a flowchart for explaining a marker identifying process in FIG. 3 in detail;
FIG. 5 is a diagram showing first and second images for explaining a case where the number of markers imaged by an image input unit is increased from one to two;
FIG. 6 is a diagram showing first and second images for explaining a case where the number of markers imaged by an image input unit is decreased from two to one;
FIG. 7 is a diagram showing a first screen a find-same-cards game as an example of using two or more same markers;
FIG. 8 is a diagram showing a second screen of a find-same-cards game as an example of using two or more same markers;
FIG. 9 is a diagram showing a third screen of a find-same-cards game as an example of using two or more same markers;
FIG. 10 is a diagram showing a fourth screen of a find-same-cards game as an example of using two or more same markers;
FIG. 11 is a diagram showing a fifth screen of a find-same-cards game as an example of using two or more same markers;
FIG. 12 is a diagram showing a sixth screen of a find-same-cards game as an example of using two or more same markers;
FIG. 13 is an illustration showing a first example of the configuration of a marker;
FIG. 14 is an illustration showing a second example of the configuration of a marker;
FIG. 15 is an illustration showing a third example of the configuration of a marker; and
FIG. 16 is an illustration showing a fourth example of the configuration of a marker.

### Best Mode for Carrying Out the Invention

Hereinafter, best mode for carrying out the invention will be explained with reference to the accompanying drawings.

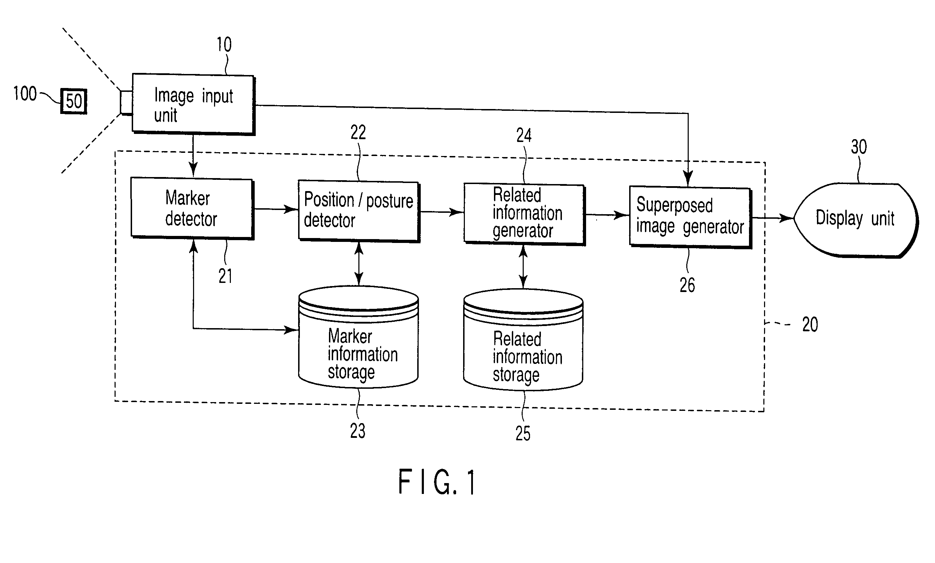

As shown in FIG. 1, an image information processing apparatus according to an embodiment of the invention comprises an image input unit 10 as a camera, a control unit 20 consisting of a personal computer, and a display unit 30 such as a liquid crystal display. Of course, these image input unit 10, control unit 20 and display unit 30 may be configured as one-piece portable apparatus. Some of the functions of the control unit 20 may be configured on a server accessible through a network.

The image input unit 10 functions as an image information input means. The image input unit 10 acquires an image of a marker 100 as an indicator having a predetermined pattern. The image input unit 10 inputs the image information obtained by imaging the marker, to the control unit 20. The marker 100 consists of a frame 101 having a predetermined shape (square in this embodiment), and a sign and design 102 including letters written inside the frame 101.

The control unit 20 includes a marker detector 21, a position/posture detector 22, a marker information storage 23, a related information generator 24, a related information storage 25, and a superposed image generator 26. The marker detector 21 functions as an extraction means. The marker detector 21 detects the marker 100 as an indicator, by detecting the frame 101 from the image information entered by the image input unit 10. The marker detector 21 supplies the detection result to the position/posture detector 22 as marker information. The position/posture detector 22 functions as a position detection means, a judgment means, and a similarity evaluation means. The position/posture detector 22 identifies a corresponding marker from the information stored in the marker information storage 23, by using the marker information from the marker detector 21, thereby detecting the position and posture of a camera (the image input unit 10). The position/posture detector 22 supplies the detection result to the related information generator 24. The marker information storage 23 stores the information related to the marker 100, such as a template image of the marker 100 and the position and posture of the marker 100. The related information generator 24 extracts preset information from the related information storage 25, and generates related information, according to the position and posture of the image input unit 10 detected by the position/posture detector 22. The related information generator 24 supplies the generated related information to the superposed image generator 26. The related information storage 25 stores related information, such as the position, posture, shape and attribute of a model placed in a model space. The superposed image generator 26 superposes the related information generated by the related information generator 24, on the image information from the image input unit 10. The superposed image generator 26 supplies the generated superposed image to the display unit 30.

The display unit 30 displays the superposed image generated by the superposed image generator 26.

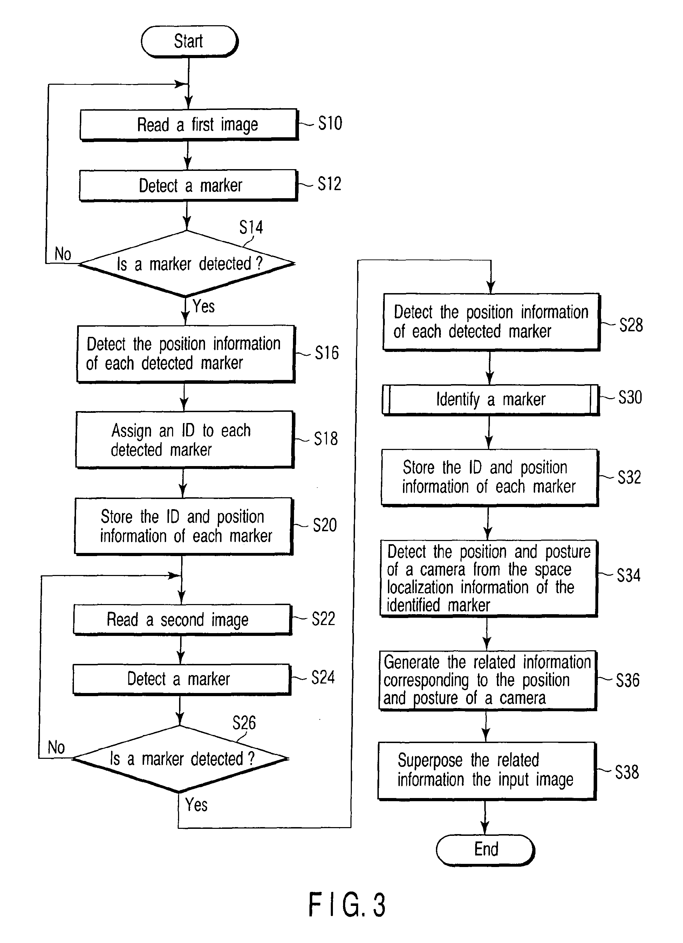

An explanation will be given on the operation of the image information processing apparatus configured as described above, by referring to the flowchart of FIG. 3.

First, the image input unit 10 shoots an image, and inputs the obtained image information to the marker detector 21, as first image information (step S10). The marker detector 21 detects a marker 100 included in the image of the entered first image information (step S12). First, a marker candidate is detected by detecting the frame 101 of the marker 100. The frame 101 is detected by a known image processing method, and detailed explanation will be omitted. The number of marker candidates detected at this time is not limited to one. Then, the coordinates in the image of four corners of the frame 101 of each detected marker candidate is detected, and the inside of the frame 101 is extracted and affine transformed. Then, pattern matching is made for the affine transformed image and the template image of the marker previously stored in the marker information storage 23 (e.g., a marker image having a sign such as "50" and a design 102). As a result, when no image is matched with the template image of the marker, it is assumed that the marker 100 is not detected (step S14), and the operation is returned to the image input step S10.

When any image is matched with the template image of the marker, it is assumed that the marker 100 is detected by the marker detector 21 (step S14). In this case, the position/posture detector 22 obtains the coordinates of the center of the frame 101 from the coordinates of four corners of the marker frame 101 detected by the marker detector 21, and regards it as the position information of each marker 100 (step S16). An ID is assigned to each detected marker (step S18). The ID and positional information of each marker are stored in a not-shown internal memory (step S20).

Then, the image input unit 10 shoots again an image, and inputs the obtained image information to the marker detector 21, as second image information (step S22). As in the step S12, the marker detector 21 detects the marker 100 included in the image of the second image information (step S24). When the marker 100 is not detected (step S26), the operation is returned to the image input step S22.

In contrast, when the marker 100 is detected (step S26), the position/posture detector 22 detects the positional information of each marker 100, as in the step S16 (step S28). Further, the position/posture detector 22 executes a marker identifying process (step S30).

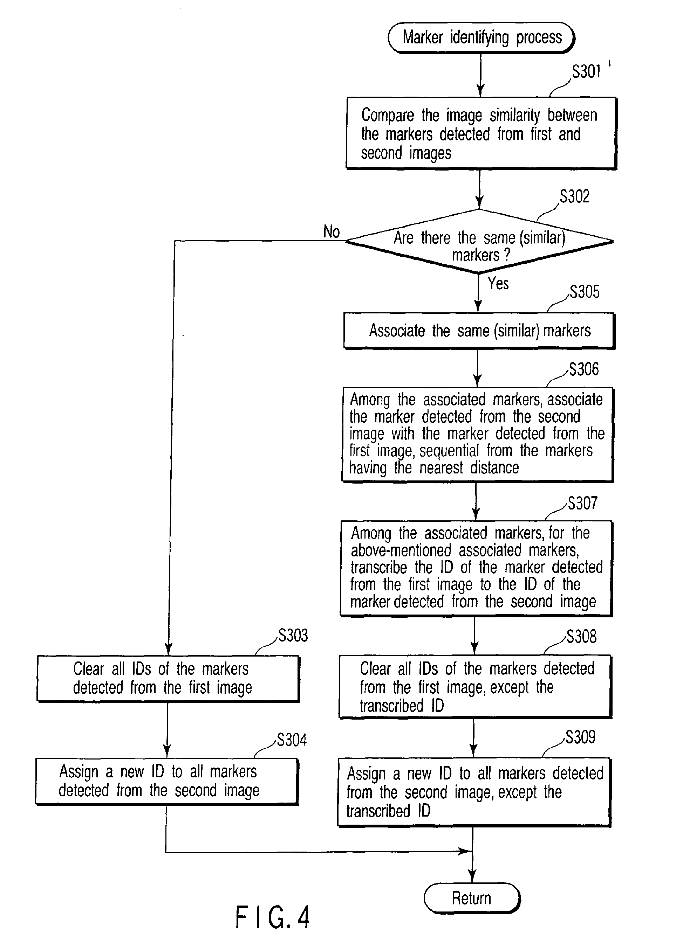

In the marker identifying process in step S30, first the image similarity between the markers detected from the first image and second image is compared as shown in FIG. 4 (step S301). This compares the similarity of each marker without discriminating the first image marker and second image marker. When the same (similar) marker is not detected (sep S302), all stored IDs of the markers detected from the first image are cleared (step S303). An ID is newly assigned to all markers detected from the second image (step S304), and the marker identifying process is finished.

In contrast, when the same (similar) marker is detected (step S302), the same (similar) markers are associated (step S305). The association is available in three types, (1) associating only the markers of the first image, (2) associating only the markers of the second image, and (3) associating both first and second images. Then, among the associated markers, the marker detected from the second image is linked to the marker detected from the first image, sequentially from the ones having the nearest distance (step S306). This is performed for each case of association, but, of course, this is done only in the case (3) where the markers of both the first and the second images are associated. When the number of markers in the first images is different from the number of markers in the second images, the larger number of markers includes a "remainder". When the markers in only the first image are associated as in the above (1), and when the markers in only the second image are associated as in (2), all markers become a "remainder".

Then, among the associated markers, for the above-mentioned linked markers, an ID of a marker detected from the first image is transcribed to an ID of a marker detected from the second image (step S307). This is performed for each case of association, and a "remainder" not associated in step S307 is not transcribed.

Then, all IDs of the markers detected from the first image are cleared, except for the transcribed ID (step S308). Namely, all IDs of the markers existing only in the first image, not existing in the second image, are cleared. An ID is newly assigned to all markers detected in the second image, except for the transcribed ID (step S309). Namely, an ID is newly assigned to a marker newly generated in the second image. Then, the marker identifying process is finished.

Now, an explanation will be given on the operation before the marker identifying process, by using a concrete example.

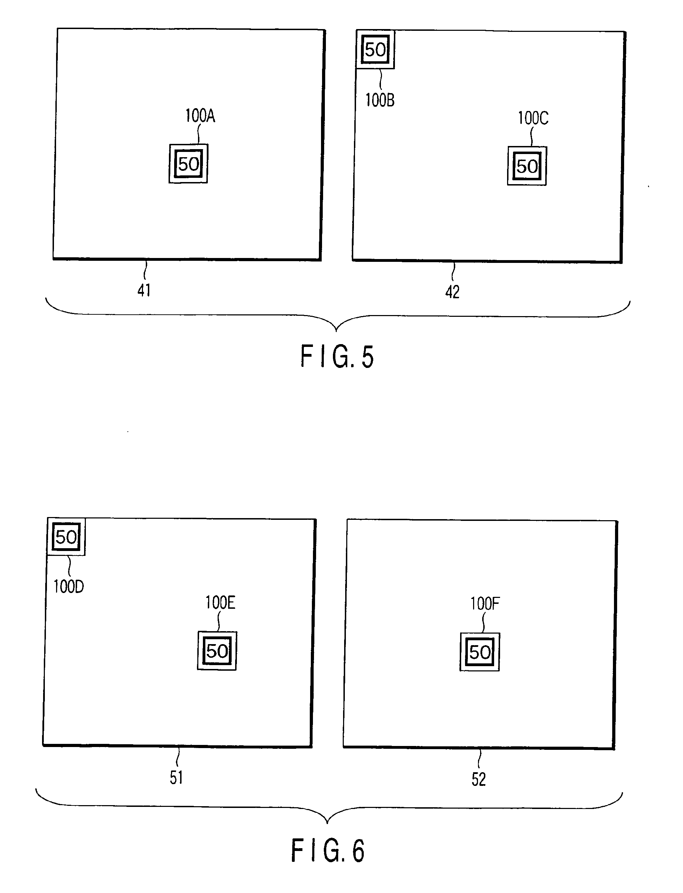

First, an explanation will be given on the case that the number of markers imaged by the image input unit 10 is increased from one to two, by referring to FIG. 5. It is assumed here that a marker 100C is the same as a marker 100A, and a marker 100B is a newly appeared marker. These markers 100A, 100B and 100C have the same design (sign and design 102).

Namely, by the operations of steps S10 to S20, one marker (marker 100A) is detected in a first image 41. This marker has the sign "50" and design 102, the center coordinates is (80, 80) (e.g., at the coordinates where the upper left of an image is (0, 0)), and an ID is stored as "1". Further, by the operations of steps S22 to S28, two markers are detected in a second image 42. Here, one marker 100B is detected as a marker having the sign "50" and design 102, and center coordinates (10, 10). The other marker 100C is detected as a marker having the sign 50" and design 102, and center coordinates (90, 90).

In such a case, in the identifying process, which marker, the marker 100B or marker 100C detected in the current second image 42, is nearer to the marker 100A having the ID "1" detected in the first image 41, is first determined by the operations of steps S301, S305 and S306. As the center coordinates of the marker 100A having the ID "1" is (80, 80), the marker 100C having the center coordinates (90, 90) is nearer than the marker 100B having the center coordinates (10, 10). Therefore, by the operations of steps S306 and S307, the ID of the marker 100C having the center coordinates (90, 90) is set to "1". As the number of markers detected in the first image 41 is one, the remaining marker B having the center coordinates (10, 10) is judged to be a marker newly detected in the current second image 42, and "2" is set as an ID of the marker B by the operation of step S309.

Therefore, it is possible to recognize the marker 100A having the sign "50" and design 102 detected at the center coordinates (80, 80) in the first image 41 as the marker 100C having the sign "50" and design 102 detected at the center coordinates (90, 90) in the current second image 42. It is also possible to recognize the marker 100B having the sign "50" and design 102 detected at the center coordinates (10, 10) in the current second image as a newly detected marker.

Next, an explanation will be given on the case that the number of markers captured by the image input unit 10 is decreased from two to one, by referring to FIG. 6. It is assumed here that a marker 100F is the same as a marker 100E, and a marker 100D is a marker that has become disappeared.

Namely, by the operations of steps S10 to S20, two markers are detected in a first image 51. One marker 100D is stored as a marker having the sign "50" and design 102, the center coordinates (10, 10), and the ID "1". The other marker 100E is stored as a marker having the sign 50" and design 102, the center coordinates (90, 90), and the ID "2". By the operations of steps S22 to S28, one marker is detected in a second image 52. The marker is detected as a marker having the sign "50" and design 102, and the center coordinates (80, 80).

In such a case, in the identifying process, first the following operation is performed by the operations of steps S301, S305 and S306. Namely, the distance from the marker 100F detected in the current second image 52 to the marker 100D having the ID "1" detected in the first image 51 is obtained. Then, the distance from the marker 100F detected in the current second image 52 to the marker 100E having the ID "2" detected in the first image 51 is obtained. As the marker 100F has the center coordinates (80, 80), the marker 100E having the center coordinates (90, 90) is nearest. Therefore, by the operations of steps S306 and S307, the ID of the marker 100F is set to "2".

As the number of markers detected in the first image 51 is two, the remaining marker 100D having the center coordinates (10, 10) is judged to be a marker failed to be detected in the current second image 52, and the ID "1" is cleared by the operation of step S308.

Therefore, it is possible to recognize the marker 100E having the sign "50" and design 102 detected at the center coordinates (90, 90) in the previous first image 51 as the marker 100F having the sign "50" and design 102 detected at the center coordinates (80, 80) in the current second image 52. It is also possible to recognize the marker 100D having the sign "50" and design 102 detected at the center coordinates (10, 10) in the first image 51 as a marker failed to be detected.

The position/posture detector 22 assigns an ID to each marker in the second image by executing the marker identifying process as described above, and stores the ID of each marker and the positional information of each marker detected in the step S28 in a not-shown internal memory (step S32).

Further, the position/posture detector 22 obtains the space localization information (position/posture information about a marker) about each identified marker from the marker information storage 23, and detects the position and posture of a camera (the image input unit 10) from the four corners of the frame 101 of the identified marker in an image (step S34). A method of obtaining the camera position and posture from a marker is disclosed in "A High Accuracy Realtime 3D Measuring Method of Marker for VR Interface by Monocular Vision" (3D Image Conference '96 Proceeding pp. 167 - 172, Akira Takahashi, Ikubo Ishii, Hedeo Makino, Makoto Nakashizuka, 1996), and detailed explanation will be omitted.

The related information generator 24 extracts predetermined information from the related information storage 25 according to the position and posture of the camera (the image input unit 10) detected by the position/attitude detector 22, and generates related information (step S36). The superposed image generator 26 superposes the related information generated by the related information generator 24 on the image from the image input unit 10, and displays the superposed image in the display unit 30 (step S38).

Even if two or more markers 100 having the same design (sign and design 102) is imaged at a time as described above, each marker 100 can be discriminated. The difference between the markers 100 existing in two or more images can be judged.

### [Application Example]

Now, an explanation will be given on the case that this embodiment is applied to a find-same-cards game, as an example of using two or more same markers 100 (having the same sign and/or design 102).

In this find-same-cards game, first one card is turned up, then a second card is turned up. When the first and second cards are the same, the character of the first card is shifted to the position of the second card as the information related to the first card.

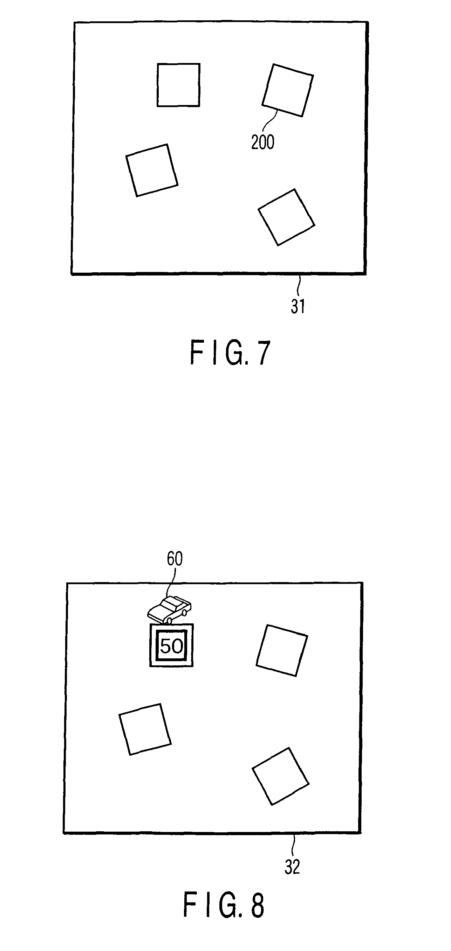

FIG. 7 shows a screen 31 of the display unit 30 when a card 200 printed with a marker 100 is imaged with the face turned down. In this case, though there are four cards 200 in the screen 31, the marker 100 is not recognized, and nothing is displayed.

FIG. 8 shows a screen 32 when one card 200 is imaged with the face turned down. In the screen 32, one marker 100 having the sign "50" and design 102 printed on the surface of the card 200 is detected. Therefore, a character 60 (a "car" in this case) as related information corresponding to the sign "50" and design 102 is displayed at the position and posture corresponding to the position and posture of the card 200 with the face turned down.

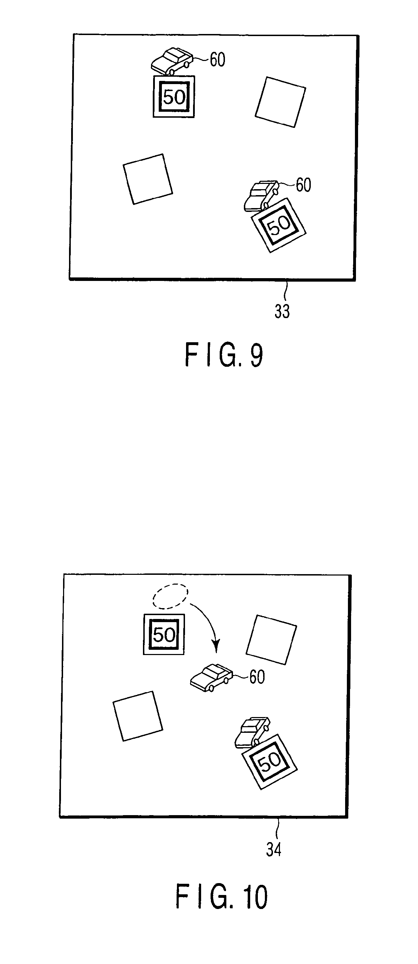

FIG. 9 shows a screen 33 when another card 200 is imaged with the face turned down. In the screen 33, two markers 100 having the same sign "50" and design 102 are detected. Therefore, two same characters 60 (a "car" in this case) corresponding to the sign "50" and design 102 are displayed according to the position and posture of each card 200.

Of course, in a find-same-card game, a card having different sign and design 102 may be turned up as a second card. In such a case, a character corresponding to the sign and design 102 printed on the second card will be displayed according to the position and posture of the second card.

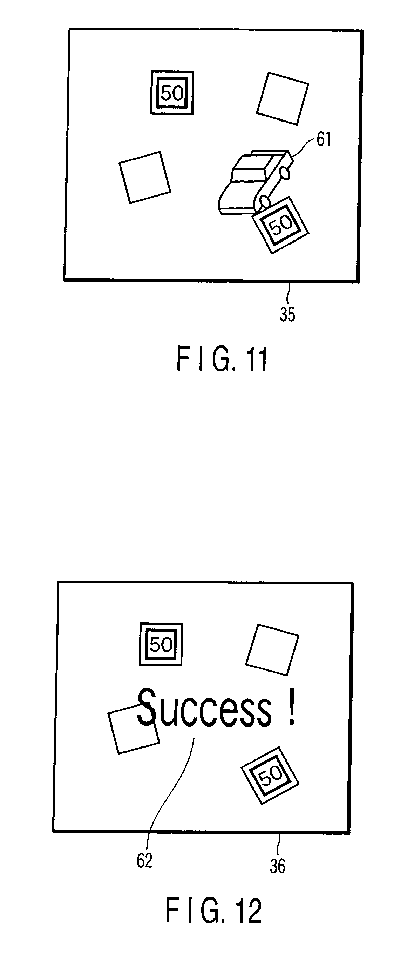

When the signs and designs 102 of two markers are identified as shown in FIG. 9, finding the same cards is successful. Therefore, in such a case, the display is changed from the screen 33 of FIG. 9 to the screens 34 to 36 in FIGS. 10 to 12. Namely, the screen 34 of FIG. 10 shows the state that the character 60 (a "car" in this case) is moving from the position of the marker 100 having the sign "50" and design 102 detected in the first card, to the marker 100 having the sign "50" and design 102 detected in the second card. The screen 35 of FIG. 11 shows the state that the movement of the character 60 (a "car" in this case) is completed, and another large character 61 is displayed. The screen 36 of FIG. 12 displays a letter 62 "Success" instead of the character 61.

As described above, even if two or more same design markers are used, the markers can be discriminated, and the application range is enlarged in addition to a find-same-cards game.

The invention has been explained herein based on one embodiment. The invention is not limited to the embodiment described herein. The invention may be embodied in other specific forms without departing from its spirit and essential characteristics.

For example, in the embodiment described herein, each components of the control unit 20 is hardware. However, the component may be realized as a computer program, and the same function may be realized by executing such a program in a computer. For example, each component of the control unit 20 may be realized as a computer program, such a computer program may be previously stored in a program memory provided in a computer. Each component of the control unit 20 may be realized as a computer program, such a computer program may be provided as a recording medium such as a CD-ROM, and may be read from a recording medium and stored in a program memory provided in a computer. Further, a program recorded in an external recording medium through an Internet or a LAN network may be downloaded and stored in a program memory.

In the embodiment described herein, two images, first image and second image, are used. Three or more images may be used. It is possible to apply prediction of movement.

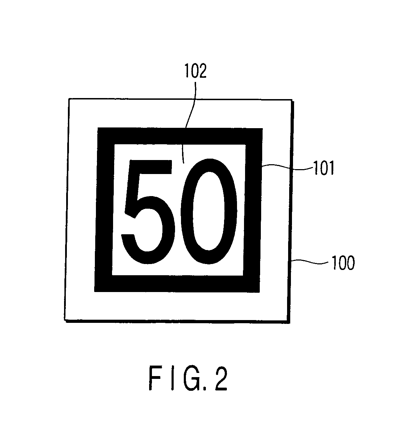

Further, in the above embodiment, the marker 100 consists of a frame 101 having a predetermined shape, and the sign and design 102 including letters written in the frame 101, as shown in FIG. 2. However, the marker 100 is not limited to such a configuration. For example, the following four and other various configurations are available.

### (Configuration example 1)

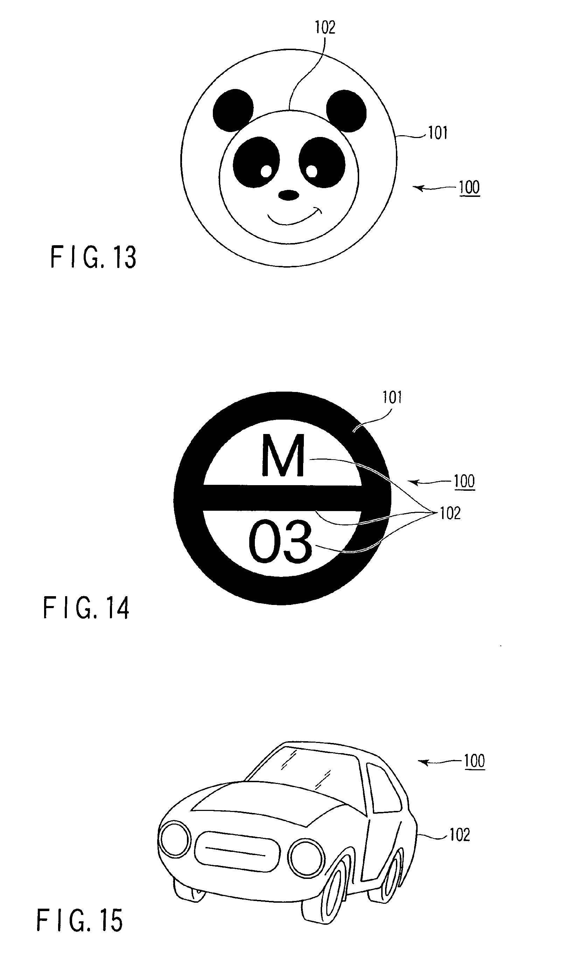

The marker 100 may be configured by enclosing the design 102 in a circular, polygonal or free-curve frame 101, as shown in FIG. 13. (The frame 101 is circular in the example shown in FIG. 13.)

### (Configuration example 2)

The marker 100 may be configured so that the frame 101 itself becomes a part of the design 102 in the frame 101, as shown in FIG. 14.

### (Configuration example 3)

The marker 100 may consist of only the design 102 without using a frame, to be distinguishable from other markers, as shown in FIG. 15.

### (Configuration example 4)

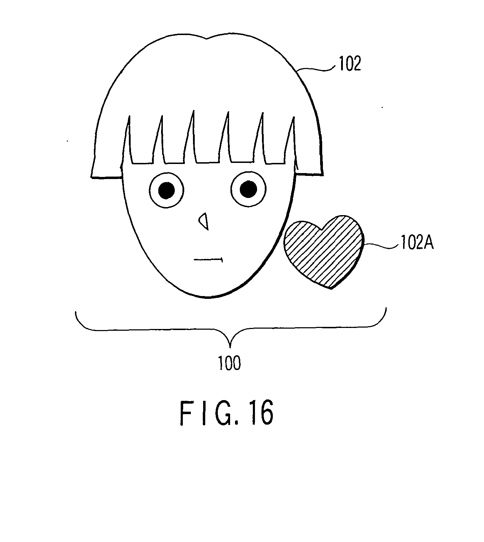

The marker 100 may be configured by placing a symbol 102A like a sign (a heart mark in this example) nearby the design 102 (a human face in this example), as shown in FIG. 16.

When the marker 100 is configured as shown in FIG. 13 to FIG. 15, it is not necessarily to use a pattern matching technique to specify the marker 100 as in steps S12 and S14. Namely, a point having a visual characteristic (hereinafter called a characteristic point) is extracted from the image information obtained from the image input unit 10. And the similarity with each characteristic point in a template image of a marker previously registered in the marker information storage 23 is judged. Thereby the marker 100 included in the image information can be specified.

When the above matching technique using a characteristic point is used to specify the marker 100, the marker 100 can be specified from the image information even if the marker 100 is overlapped or partially lacked. Namely, the matching technique using a characteristic point is practically effective to specify the marker 100.

Further, the matching technique using a characteristic point may be applied to the calculation of the position information about the marker 100 by the position/posture detector 22 (step S16). Namely, the position/posture detector 22 may calculate the position information about the marker 100 as follows, instead of detecting the position information from the coordinates of four corners of the frame 101 of the marker 100. Namely, the position information about the marker 100 may be calculated based on the center of gravity of a pixel of the marker 100 occupying the inside of the image information, the center of gravity of a characteristic pint of the marker 100, or several most spread points among the characteristic points of the marker 100. Here, the several most spread points may be three, four or more. The number of points may be dynamically changed so as to include all characteristic points of the marker 100.

Further, the position information about each marker 100 obtained by the position/posture detector 22 can include not only a position in the image information about each marker 100, but also directional information at the position. Here, the directional information indicates how much the upper direction of the marker 100 specified in the image information is rotated from the reference axis, when the upper direction used at the time of storing a template image of the marker 100 in the marker information storage 23, for example. The rotation is not limited to two-dimensional rotation. For example, a three-dimensional posture may be calculated from a trapezoidal distortion of the marker 100. This calculation is possible by using a known technique. The information about the direction of the marker 100 obtained by this calculation can be regarded as posture information in a three-dimensional space. The trapezoidal distortion of the marker 100 can be obtained from the square frame as shown in FIG. 2. It is needless to say that the trapezoidal distortion can be obtained also by the above-mentioned matching technique using a characteristic point, by considering a relative position of a characteristic point.

## Claims

1. An image information processing apparatus **characterized by** comprising:
an image information input unit (10) for inputting image information;
an extraction unit (21) for extracting an indicator (100) in an image of the image information input by the image information input unit (10);
a position detection unit (22) for detecting a position of the indicator (100) extracted by the extraction unit (21) in the image; and
a judgment unit (22) for judging the difference between indicators extracted from images, having a judgment condition based on the position of each indicator detected by the position detection unit (22), at least as a selectively applied judgment condition.

2. The image information processing apparatus according to claim 1, **characterized by** further comprising:
a similarity evaluation unit for evaluating the similarity between the indicators (100) extracted by the extraction unit (21),
wherein the judgment unit (22) judges the difference between the indicators (100) based on the position information about each indicator detected by the position detection unit (22), when the difference is not judged only by the evaluation result of the similarity evaluation unit (22).

3. The image information processing apparatus according to claim 1, **characterized in that** the judgment unit (22) judges the indicators (100) identical, when the distance between the indicators (100) obtained from the position information about the indicators (100) detected by the position detection unit (22) is nearest.

4. A method of judging the difference between indicators existing in images, **characterized by** comprising:
a step (S10, S22) of inputting images;
a step (S12, S24) of extracting an indicator in each input image;
a step (S16, S28) of detecting a position of the extracted indicator on an image; and
a step (S30) of judging the difference between image indicators extracted from the input images, by at least selectively applying a judgment condition based on the detected position of the indicator (100).

5. The judging method according to claim 4, **characterized by** further comprising:
a step (S301) of evaluating the similarity between the extracted indicators (100),
wherein the step (S30) of judging the difference between the image indicators (100) is the step of judging the difference based on the position information about each indicator (100) detected by the position detection step (S16, S28), when the difference between the indicators (100) is not judged only by the evaluation result of the similarity.

6. The judging method according to claim 4, **characterized in that** the step (S30) of judging the difference between image indicators is the step of judging the indicators identical, when the distance between the indicators detected from the position information about each indicator (100) detected by the position detection step (S16, S28) is nearest.

7. A computer program to cause a computer to judge the difference between indicators (100) existing in images, **characterized by** comprising:
inputting images (S10, S22);
extracting (S12, S24) an indicator (100) in each input image;
detecting (S12, S26) a position of the extracted indicator (100) on an image; and
judging (S30) the difference between image indicators extracted from the input images, by at least selectively applying a judgment condition based on the detected position of the indicator (100).
